# EUROPÄISCHE PATENTSCHRIFT

(11) **EP 4 281 305 B1**
(45) Veröffentlichungstag und Bekanntmachung des Hinweises auf die Patenterteilung: **15.04.2026**
(21) Anmeldenummer: 21840830.0
(22) Anmeldetag: 16.12.2021
(51) Int. Cl.: B60K 15/03, B60K 15/07, B62D 21/03

(54) **KRAFTFAHRZEUG**
MOTOR VEHICLE
VÉHICULE À MOTEUR

(30) Priorität: 25.01.2021 DE 102021200626
(43) Veröffentlichungstag der Anmeldung: 29.11.2023
(73) Patentinhaber: Stellantis Auto SAS, 78300 Poissy (FR)
(72) Erfinder: SPLIETH, Michael, 65428 Rüsselsheim am Main (DE); ESSINGER, Reiner, 65428 Rüsselsheim am Main (DE)
(74) Vertreter: BCIP
(86) Internationale Anmeldenummer: PCT/EP2021/086249
(87) Internationale Veröffentlichungsnummer: WO 2022/156971

(56) Entgegenhaltungen:
- EP-A1- 3 539 811
- JP-A- 2019 001 231
- US-A1- 2020 070 641

## Beschreibung

Die vorliegende Erfindung betrifft ein Kraftfahrzeug mit einer Kraftstofftankbaugruppe dafür. Insbesondere Tanks für unter Druck stehenden Kraftstoff sind an einem Fahrzeug schwierig unterzubringen, da zum einen hohe Anforderungen an den Schutz vor Beschädigung bei einem Unfall zu erfüllen sind und zum anderen der hohe Innendruck eine gedrungene Bauform des Tanks nötig macht und die Form des Tanks nur sehr eingeschränkt an vorhandene, nicht anderweitig genutzte Hohlräume im Fahrzeug angepasst werden kann.

DE 10 2007 046 059 A1 offenbart eine Kraftstofftankbaugruppe für ein Kraftfahrzeug, bei dem ein Tank, um hohe Druckfestigkeit bei geringem Gewicht zu erreichen, als Schichtstruktur aus Verbundmaterial gebildet ist, wobei, um eine Verletzung der Schichtstruktur durch Befestigungsmittel zu vermeiden, zur Befestigung der Baugruppe im Fahrzeug benötigte Streben jeweils zwischen Schichten des Verbundmaterials eingebettet sind. Wenn allerdings bei einem Unfall die Streben einer Stauchkraft ausgesetzt sind, so wird diese im Wesentlichen ungedämpft an den Tank weitergegeben. Die Kraftstofftankbaugruppe ist daher nur in geringem Umfang in der Lage, einer unfallbedingten Deformation Widerstand entgegenzusetzen, und die Gefahr ist groß, dass eine Deformation zu einer Schädigung des Tanks führt.

Aus dem Stand der Technik sind ferner die JP 2019-001231 und die EP 3 539811 A1 bekannt.

Eine Aufgabe der vorliegenden Erfindung ist, ein Kraftfahrzeug mit einer Tankbaugruppe anzugeben, bei der die Gefahr einer Schädigung des Tanks bei einem Unfall vermindert ist.

Die Aufgabe wird einer Ausgestaltung der Erfindung zufolge gelöst, indem bei eine Kraftstofftankbaugruppe für ein Kraftfahrzeug eine Anzahl von Querstreben und eine Anzahl von Längsstreben zur Befestigung wenigstens eines Tanks an dem Kraftfahrzeug umfasst und die Streben untereinander zu einem Gerüst verbunden sind, das geformt ist, um den Tank gefangen zu halten. Das Gerüst erlaubt es, Deformationskräfte im Falle eines Unfalls um den Tank herumzuleiten und diesen so vor Überbeanspruchung zu schützen; gleichzeitig stabilisiert das Gerüst einen Einbauraum des Fahrzeugs, in dem es selbst und der Tank untergebracht sind, und vermindert so die Gefahr einer Beschädigung des Tanks durch von außen einwirkende Fremdkörper.

Erfindungsgemäß ist der wenigstens eine Tank Bestandteil der Baugruppe.

Erfindungsgemäß ist der Tank ein Druckbehälter, der langgestreckt zylindrisch geformt ist.

Eine solche Tankbaugruppe kann in an sich bekannter Weise an einer Karosserieunterseite des Fahrzeugs montiert sein, insbesondere kann der Einbauraum eine Aussparung zwischen Längsträgern der Karosserie sein.

Die Querstreben erstrecken sich oberhalb des Tanks und umfassen zwei rechtwinklig zu ihrer Längsrichtung orientierte Stirnseiten auf. Bei einer Kollision können die Querstreben aus seitlicher Richtung den der Kollisionsstelle zugewandten Längsträger am anderen Längsträger abstützen und so einer Verengung der Aussparung entgegenwirken.

Eine Querstrebe kann ein stranggepresstes oder durch Biegen von Flachmaterial, insbesondere von Stahlblech, geformtes Profil sein. Um den Längsträgern zugewandte Kanten eines solchen Profils im Kollisionsfall zu stabilisieren und eine großflächige Abstützung der Längsträger zu ermöglichen, sind die Stirnseiten vorzugsweise durch an das Profil angefügte, insbesondere angeschweißte, Stirnplatten gebildet.

Zwischen den Enden der Querstrebe und den Längsträgern kann ein Spalt freigehalten sein, einerseits um eine problemlose Einführung der Tankbaugruppe zwischen die Längsträger zu gewährleisten, andererseits um zu verhindern, dass die Enden der Strebe an den Längsträgern reiben, wenn diese im Betrieb relativ zueinander arbeiten.

Die Querstreben erste Strebe weisen ferner an einer Unterkante jeder Stirnseite eine über die Stirnseite vorspringende Befestigungslasche auf, die zur Fixierung an einer Unterseite eines Längsträgers dient. Die Lasche kann zusammen mit der Stirnplatte einteilig aus Flachmaterial geformt sein.

Die Stirnplatte kann ferner einteilig mit seitlichen Laschen ausgebildet sein, die zurückgeklappt sind, um an Flanken des Profils anzuliegen und dort eine Verschweißung zu ermöglichen.

Die oben erwähnten Längsstreben bilden erfindungsgemäß als einen Teil des Gerüsts eine Wanne, die den wenigstens einen Tank aufnimmt.

Die Quersterben können sich über den Tank hinweg von einer Seite der Wanne zur anderen erstrecken.

Erfindungsgemäß kommen die Querstreben beim Einbau der Kraftstofftankbaugruppe in ein Kraftfahrzeug zwischen dessen Längsträgern zu liegen und können einer Annäherung der Längsträger aneinander und einer damit einhergehenden Stauchung der Fahrgastzelle und des für den Tank verfügbaren Raums im Fall eines Seitenaufpralls entgegenwirken.

Die Querstreben können an zwei der Längsstreben verankert sein, die seitliche Flanken der Wanne bilden.

Die seitlichen Flanken bzw. die sie bildenden Längsstreben können jeweils einen Profilabschnitt aufweisen, der den Unterseiten der Längsträger in geringem Abstand gegenüberliegt und so einen Spalt bildet, der die Befestigungslasche aufnimmt.

Um die Befestigungslasche in der Längsrichtung des Spaltes unbeweglich zu halten, kann die Längsstrebe mit dem Längsträger durch den Spalt kreuzende Stifte verbunden sein. Ein solcher Stift kann als Schraube oder Niet ausgebildet sein. Er kann sich durch ein Loch der Befestigungslasche erstrecken.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht einer Kraftstofftankbaugruppe;
- Fig. 2: eine Draufsicht auf die Kraftstofftankbaugruppe ohne Tanks; und
- Fig. 3: einen Schnitt durch einen Längsträger und daran befestigte Teile der Kraftstofftankbaugruppe.

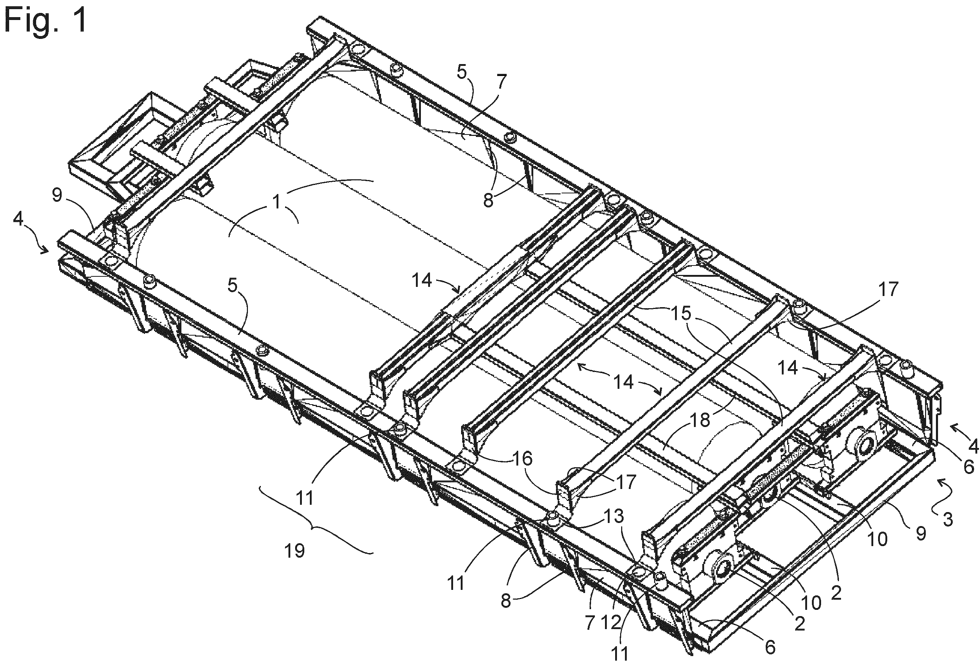

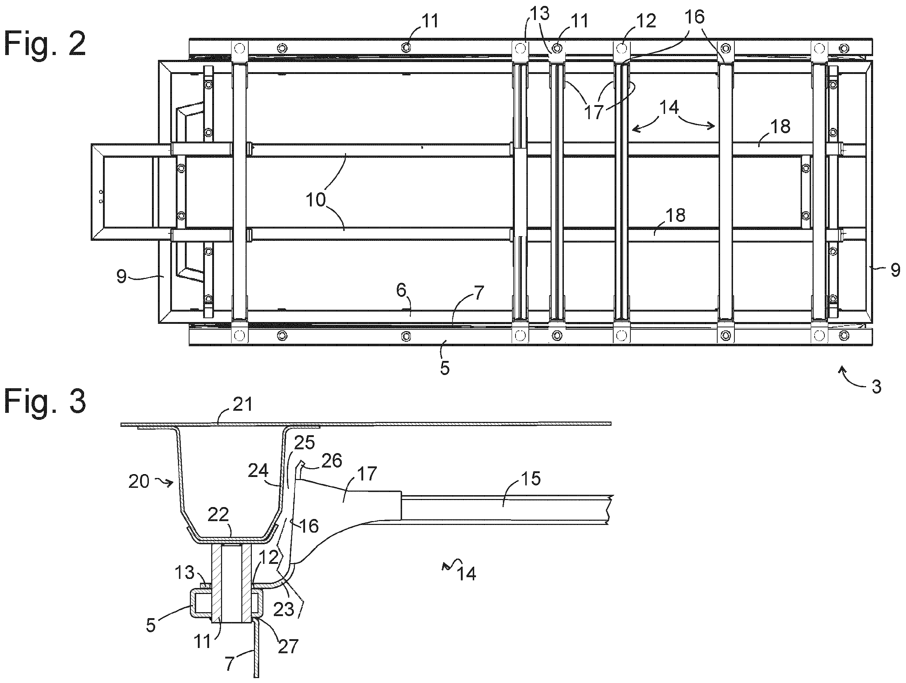

Fig. 1 und 2 zeigen eine erfindungsgemäße Kraftstofftankbaugruppe in einer perspektivischen Ansicht schräg von oben bzw. einer Draufsicht. Die Kraftstofftankbaugruppe umfasst wenigstens einen, hier mehrere parallel zueinander angeordnete, langgestreckt zylindrische Tanks 1 mit kuppelförmigen Enden, von denen jeweils eines einen Ein-/Auslassanschluss 2 aufweist. Die Tanks 1 sind in einer Wanne 3 aufgenommen. Seitliche Flanken 4 der Wanne 3 können einteilig aus Stahlblech, z.B. als Rollprofile, geformt sein. Hier umfassen sie hingegen jeweils ein oberes Profil 5, ein unteres Profil 6 und eine die Profile 5, 6 verbindende Wandplatte 7. Die Profile 5, 6 sind hier jeweils als Hohlprofile, insbesondere Vierkant-Hohlprofile ausgebildet, an denen Ränder der Wandplatte 7 verschweißt sind. Durch den mehrteiligen Aufbau ist es möglich, in der Wandplatte 7 Versteifungsrippen 8 zu formen, die sich von einem Profil 5, 6 zum anderen erstrecken.

Die unteren Hohlprofile 6 sind durch Querstreben 9, von denen zwei am vorderen und hinteren Ende der Wanne 3 sichtbar sind, zu einem Gerüst verbunden. Weitere Querstreben könnten unter den Tanks 1 verborgen sein; im hier betrachteten Fall ist dies nicht der Fall, stattdessen reichen die Tanks 1 nach unten bis in Höhe der unteren Hohlprofile 6. Längsstreben 10 verlaufen zwischen den Tanks 1 auf gleicher Höhe wie die unteren Hohlprofile 6 und verbinden die Querstreben 9 miteinander.

Die seitlichen Flanken 4 tragen entlang ihrer Oberseite verteilte Schweißstifte 11, die wie später noch genauer erläutert zur Befestigung der Kraftstofftankbaugruppe an Längsträgern einer Kraftfahrzeugkarosserie vorgesehen sind. Wenigstens einzelne dieser Schweißstifte 11 erstrecken sich durch Löcher 12 in Befestigungslaschen 13 von Querstreben 14.

Die Querstreben 14 umfassen jeweils ein langgestrecktes, rollgeformtes oder extrudiertes Profilelement 15, vorzugsweise ein Vierkant-Hohlprofil, und zwei an den Enden jedes Profilelements 15 befestigte, insbesondere verschweißte, Abschlusselemente. Die Abschlusselemente sind aus ursprünglich T-förmigen Flachmaterial zuschnitten gebogen, wobei ein Kernbereich des T vor dem Ende des Profilelements 15 platziert ist, um dort eine Stirnplatte 16 zu bilden, von dem Kernbereich abstehende Arme 17 des T zurückgebogen sind, um an Seitenwänden des Profilelements 15 befestigt zu werden, und ein mit dem Loch 12 versehenes Bein des T vorgebogen ist, um die Befestigungslasche 13 zu bilden.

Diejenigen Querstreben 14, deren Befestigungslaschen 13 von einem Schweißstift 11 durchsetzt sind, sind in Längs- und Querrichtung relativ zur Wanne 3 fixiert. In der gezeigten Ausgestaltung ist dies nicht bei allen Querstreben 14 der Fall; diese sind fixiert, indem sie über Längsstreben 18 mit den durchsetzten Querstreben verbunden sind.

Die Dichte, in der die Querstreben 14 entlang der Wanne 3 verteilt sind, kann variieren; im hier gezeigten Fall ist ihre Dichte in einem mittleren Abschnitt 19 der Kraftstofftankbaugruppe am höchsten, der vorgesehen ist, um unter den Sitzen der Kraftfahrzeugkarosserie angeordnet zu werden, um diese so insbesondere in Höhe des Rumpfes von Fahrer und Beifahrer zu versteifen.

Fig. 3 zeigt einen Querschnitt durch einen von zwei Längsträgern 20 der Fahrzeugkarosserie und einen Randbereich der Kraftstofftankbaugruppe in Höhe eines der Schweißstifte 11. Die von dem Schweißstift 11 durchsetzte Befestigungslasche 13 ist ebenfalls im Schnitt gezeigt, andere Teile des zugehörigen Abschlusselements sowie das zugehörige Profilelement 15 hingegen in einer Ansicht von vorn oder hinten bezogen auf die Längsrichtung der Fahrzeugkarosserie.

Der Längsträger 20 ist durch ein oberseitig von einer Karosseriebodenplatte 21 verschlossenes Hutprofil gebildet. Eine Unterseite 22 des Hutprofils ist verdoppelt, um sicherzustellen, dass die Belastbarkeit des Längsträgers 20 nicht durch Anschweißen des Schweißstifts 11 beeinträchtigt wird.

Der Schweißstift 11 ist rohrförmig und kreuzt das obere Hohlprofil 5, so dass ein Schweißwerkzeug ins Innere des Schweißstifts 11 durch dessen offenes unteres Ende einführbar ist. So ist die Zugänglichkeit der Schweißstelle auf dem gesamten Umfang des Schweißstifts 11 gewährleistet.

Die Befestigungslasche 13 ist auf der Oberseite des oberen Hohlprofils 5 verschweißt. Die über eine Biegezone 23 einteilig an die Befestigungslasche 13 anschließende Stirnplatte 16 liegt einer Seitenwand 24 des Längsträgers 20 in geringem aber nichtverschwindendem Abstand gegenüber. Der Abstand ist unter Berücksichtigung von Fertigungstoleranzen so bemessen, dass ein Einfügen der Querstreben 14 zwischen die sich gegenüberliegenden Seitenwände 24 der Längsträger 20 ohne Klemmen möglich ist. Die Breite eines Spalts 25 zwischen Querstrebe 14 und Längsträger 20 beträgt vorzugsweise zwischen 2 und 10 mm, typischerweise ca. 5 mm.

An einem oberen Rand der Stirnplatte kann eine Schräge 26 abgewinkelt sein, um das Einführen der Einfügen der Querstreben 14 zwischen die Längsträger 20 zu erleichtern.

Im Fall einer Kollision aus seitlicher Richtung wird der zur Kollisionszone benachbarte Längsträger 20 zum Mitte der Karosserie hin ausgelenkt. Dadurch schließen sich zunächst der Spalt 25 zwischen ihm und den Querstreben 14; anschließend auch der gegenüberliegende Spalt, und auch der von der Kollisionszone abgewandte Längsträger 20 trägt zum Deformationswiderstand der Karosserie bei.

Eine Verbindung 27 zwischen dem oberen Hohlprofil 5 und der Wandplatte 7 kann schwächer ausgelegt sein als die zwischen dem oberen Hohlprofil 5 und dem Längsträger 20, so dass sie im Kollisionsfall versagen und dem Gerüst aus unteren Hohlprofilen 6 und Streben 9, 10 sowie den darauf ruhenden Tanks 1 ein Ausweichen nach unten ermöglichen kann.

### Bezugszeichen

- 1: Tank
- 2: Ein-/Auslassanschluss
- 3: Wanne
- 4: seitliche Flanke
- 5: oberes Hohlprofil
- 6: unteres Hohlprofil
- 7: Wandplatte
- 8: Versteifungsrippe
- 9: Querstrebe
- 10: Längsstrebe
- 11: Schweißstift
- 12: Loch
- 13: Befestigungslasche
- 14: Querstrebe
- 15: Profilelement
- 16: Stirnplatte
- 17: Arm
- 18: Längsstrebe
- 19: mittlerer Abschnitt
- 20: Längsträger
- 21: Karosseriebodenplatte
- 22: Unterseite
- 23: Biegezone
- 24: Seitenwand
- 25: Spalt
- 26: Schräge
- 27: Verbindung

## Patentansprüche

1. Kraftfahrzeug mit zwei Längsträgern (20) und einer in einen Zwischenraum zwischen den Längsträgern (20) eingreifenden Kraftstofftankbaugruppe, wobei die Kraftstofftankbaugruppe eine Anzahl von Querstreben (14) und eine Anzahl von Längsstreben (10) zur Befestigung wenigstens eines Tanks (1) an dem Kraftfahrzeug besitzt und die Querstreben (14) zwischen dessen Längsträgern (20) liegen, wobei der Tank (1) als Druckbehälter ausgebildet ist und wobei die Querstreben (14) und Längsstreben Streben (10) untereinander zu einem Gerüst zum Fangen des wenigstens einen Tanks (1) verbunden sind und wobei die Kraftstofftankbaugruppe ferner den von dem Gerüst gefangenen Tank (1) umfasst, **dadurch gekennzeichnet, dass** die Querstreben (14) sich oberhalb des Tanks (1) erstrecken und zwei rechtwinklig zu ihrer Längsrichtung orientierte Stirnseiten aufweisen, und wobei die Querstreben (14) an einer Unterkante jeder Stirnseite eine über die Stirnseite vorspringende Befestigungslasche (13) aufweisen und wobei die Befestigungslaschen (13) an Unterseiten (22) der Längsträger (20) fixiert sind.

2. Kraftfahrzeug nach Anspruch 1, bei der die Querstreben (14) ein stranggepresstes oder durch Biegen von Flachmaterial geformtes Profil (15) umfassen und die Stirnseiten durch eine an das Profil (15) angefügte Stirnplatte (16) gebildet sind.

3. Kraftfahrzeug nach einem der vorherigen Ansprüche, bei der das Gerüst der Kraftstofftankbaugruppe eine von den Längsstreben (10) gebildete, den wenigstens einen Tank (1) aufnehmende Wanne (3) umfasst, und wenigstens eine Querstrebe (14) sich über den Tank (1) hinweg von einer Seite der Wanne (3) zur anderen erstreckt.

4. Kraftfahrzeug nach einem der vorherigen Ansprüche,, bei dem die Quersterben (14) sich auf der Höhe der Längsträger (20) erstrecken.

5. Kraftfahrzeug nach einem der vorherigen Ansprüche, bei dem zwischen den Enden der Strebe (14) und den Längsträgern (20) ein Spalt (25) freigehalten ist.

6. Kraftfahrzeug nach Anspruch 2, wobei die Stirnplatten (16) Seitenwänden (24) der Längsträger (20) gegenüberliegen.

7. Kraftfahrzeug nach Anspruch 3, wobei seitliche Flanken (4) der Wanne (3) an den Längsträgern (20) fixiert sind.

8. Kraftfahrzeug nach Anspruch 7, bei dem die Befestigungslaschen (13) zwischen den Unterseiten (22) der Längsträger (20) und den seitlichen Flanken (4) der Wanne (3) angeordnet und durch Stifte (11) fixiert sind, die die Längsträger (20) mit den Flanken (4) verbinden.

9. Kraftfahrzeug nach Anspruch 8, bei dem die Stifte (11) hohl und an den Unterseiten (22) der Längsträger (20) verschweißt sind.

## Claims

1. Motor vehicle with two longitudinal members (20) and a fuel tank assembly engaging in a space between the longitudinal members (20), wherein the fuel tank assembly has a number of transverse members (14) and a number of longitudinal members (10) for attaching at least one tank (1) to the motor vehicle, and the transverse members (14) are located between its longitudinal members (20), wherein the tank (1) is designed as a pressure vessel, and wherein the transverse members (14) and longitudinal members (10) are connected to one another to form a frame for capturing the at least one tank (1), and wherein the fuel tank assembly further comprises the tank (1) captured by the frame, **characterized in that** the transverse members (14) extend above the tank (1) and have two end faces oriented perpendicular to their longitudinal direction, and wherein the transverse members (14) have a mounting tab (13) projecting beyond the end face on a lower edge of each end face, and wherein the mounting tabs (13) are attached to undersides (22) the longitudinal members (20) are fixed.

2. Motor vehicle according to claim 1, in which the cross members (14) comprise an extruded profile (15) or a profile formed by bending flat material, and the end faces are formed by an end plate (16) attached to the profile (15).

3. Motor vehicle according to any one of the preceding claims, in which the frame of the fuel tank assembly comprises a trough (3) formed by the longitudinal members (10) and accommodating the at least one tank (1), and at least one cross member (14) extends across the tank (1) from one side of the trough (3) to the other.

4. Motor vehicle according to any one of the preceding claims, in which the cross members (14) extend at the level of the longitudinal members (20).

5. Motor vehicle according to any one of the preceding claims, in which a gap (25) is maintained between the ends of the cross member (14) and the longitudinal members (20).

6. Motor vehicle according to claim 2, wherein the end plates (16) are opposite side walls (24) of the longitudinal members (20).

7. Motor vehicle according to claim 3, wherein lateral flanks (4) of the tub (3) are fixed to the longitudinal members (20).

8. Motor vehicle according to claim 7, wherein the fastening tabs (13) are arranged between the undersides (22) of the longitudinal members (20) and the lateral flanks (4) of the tub (3) and are fixed by pins (11) that connect the longitudinal members (20) to the flanks (4).

9. Motor vehicle according to claim 8, wherein the pins (11) are hollow and welded to the undersides (22) of the longitudinal members (20).

## Revendications

1. Véhicule automobile comportant deux longerons (20) et un ensemble réservoir de carburant logé entre ces longerons (20), cet ensemble réservoir de carburant comprenant plusieurs traverses (14) et plusieurs longerons (10) permettant de fixer au moins un réservoir (1) au véhicule automobile. Les traverses (14) sont situées entre les longerons (20). Le réservoir (1) est conçu comme un récipient sous pression. Les traverses (14) et les longerons (10) sont reliés entre eux pour former un cadre permettant de maintenir le réservoir (1). L'ensemble réservoir de carburant comprend en outre le réservoir (1) maintenu par le cadre. Les traverses (14) s'étendent au-dessus du réservoir (1) et présentent deux faces d'extrémité perpendiculaires à leur axe longitudinal. Chaque traverse (14) comporte une patte de fixation (13) faisant saillie au-delà de la face d'extrémité sur son bord inférieur. Les pattes de fixation (13) sont fixées aux faces inférieures (22) des longerons (20). Fixe.

2. Véhicule automobile selon la revendication 1, dans lequel les traverses (14) comprennent un profilé extrudé (15) ou un profilé obtenu par pliage d'un matériau plat, et leurs faces d'extrémité sont formées par une plaque d'extrémité (16) fixée au profilé (15).

3. Véhicule automobile selon l'une quelconque des revendications précédentes, dans lequel le châssis de l'ensemble réservoir de carburant comprend une gorge (3) formée par les longerons (10) et accueillant au moins un réservoir (1), et au moins une traverse (14) s'étend transversalement sur le réservoir (1) d'un côté à l'autre de la gorge (3).

4. Véhicule automobile selon l'une quelconque des revendications précédentes, dans lequel les traverses (14) s'étendent au niveau des longerons (20).

5. Véhicule automobile selon l'une quelconque des revendications précédentes, dans lequel un jeu (25) est maintenu entre les extrémités de la traverse (14) et les longerons (20).

6. Véhicule automobile selon la revendication 2, dans lequel les plaques d'extrémité (16) sont opposées aux parois latérales (24) des longerons (20).

7. Véhicule automobile selon la revendication 3, dans lequel les flancs latéraux (4) de la caisse (3) sont fixés aux longerons (20).

8. Véhicule automobile selon la revendication 7, dans lequel les pattes de fixation (13) sont disposées entre les faces inférieures (22) des longerons (20) et les flancs latéraux (4) de la caisse (3) et sont fixées par des axes (11) reliant les longerons (20) aux flancs (4).

9. Véhicule automobile selon la revendication 8, dans lequel les axes (11) sont creux et soudés aux faces inférieures (22) des longerons (20).
